# FASCICULE DE BREVET EUROPEEN

(11) **EP 2 598 390 B1**
(45) Date de publication et mention de la délivrance du brevet: **06.05.2015**
(21) Numéro de dépôt: 11754447.8
(22) Date de dépôt: 19.07.2011
(51) Int. Cl.: B60T 13/74, F16H 1/00, G01L 21/00, H01H 35/34, H01H 9/16, B60T 17/22, B60T 13/46

(54) **CAPTEUR DE VIDE POUR SERVOFREIN ET PROCEDE DE CONTROLE ASSOCIE**
VAKUUMSENSOR FÜR EINEN BREMSKRAFTVERSTÄRKER UND STEUERVERFAHREN DAFÜR
VACUUM SENSOR FOR BRAKE BOOSTER AND ASSOCIATED CONTROL METHOD

(30) Priorité: 29.07.2010 FR 1056289
(43) Date de publication de la demande: 05.06.2013
(73) Titulaire: Renault S.A.S., 92100 Boulogne-Billancourt (FR)
(72) Inventeur: BOURIK, Karim, 78000 Versailles (FR); DOMAS, Régis, 78180 Montigny Le Bretonneux (FR)
(86) Numéro de dépôt international: PCT/FR2011/051740
(87) Numéro de publication internationale: WO 2012/022875

(56) Documents cités:
- WO-A1-00/31766
- US-A- 3 372 372

## Description

L'invention se situe dans le domaine du freinage automobile, et plus particulièrement dans le domaine de la régulation du système de dépressurisation d'un servofrein.

Dans un servofrein, une membrane sépare le corps du servofrein en deux chambres, l'une des chambres pouvant être mise en dépression par rapport à l'autre qui reste à la pression atmosphérique. Cette dépression est obtenue soit en utilisant la dépression du collecteur d'admission d'un moteur thermique, soit en utilisant une pompe à vide spécifique, par exemple dans le cas d'un véhicule à propulsion électrique. Une pompe à vide spécifique peut également être utilisée dans le cas d'un véhicule à moteur thermique, pour renforcer l'ampleur de la dépressurisation obtenue au moyen du collecteur d'admission d'un moteur thermique.

Sous l'effet de la commande de la pédale de freinage, de l'air à pression atmosphérique est admis d'un côté de la membrane, qui, en se déplaçant, contribue alors à l'effort de freinage. Après quelques coups de freins, il est donc nécessaire, pour continuer à bénéficier de l'effet d'assistance au freinage, d'aspirer à nouveau l'air présent dans la chambre de dépression du servofrein afin d'obtenir un niveau de vide suffisant.

Un clapet ou soupape antiretour est disposé au niveau d'une sortie d'air permettant d'aspirer l'air de la chambre de dépression vers la pompe dédiée ou vers le collecteur d'admission. Ce clapet permet à l'air d'être aspiré hors de la chambre, et ne permet pas, en revanche, à l'air extérieur de rentrer à l'intérieur de la chambre.

Ainsi, lorsque le moteur thermique et/ou la pompe électrique sont coupés, le vide qui a été effectué préalablement à l'intérieur de la chambre de dépression est maintenu grâce au clapet, du moins jusqu'à ce que de nouveaux coups de freins commandent une entrée d'air à l'intérieur du servofrein. Cette entrée d'air n'étant pas compensée par un système de pompage, lors des appuis subséquents du conducteur sur la pédale de frein, la différence résiduelle de pression de part et d'autre de la membrane, ne permet plus d'obtenir un effort d'assistance au freinage suffisant. Si le vide n'est pas à nouveau effectué à l'intérieur du servofrein, le conducteur doit donc compenser en fournissant la plus grande partie de l'effort nécessaire au freinage, ce qui peut le surprendre.

Quand le véhicule est à l'arrêt, mais non en configuration de parcage, c'est-à-dire que les commandes au tableau de bord indiquent que le conducteur est susceptible de demander un redémarrage du véhicule dans les minutes qui suivent, un détecteur de vide placé sur le clapet antiretour permet d'évaluer la réserve de vide encore disponible à l'intérieur du servofrein. Le niveau de vide à l'intérieur du servofrein provoque une déformation plus ou moins accentuée d'une membrane du clapet. Des contacteurs électriques présents sur la membrane sont disposés de manière à être écartés sur une première plage de déformation de la membrane, et à être en contact au-delà (ou en deçà) d'un certain niveau de déformation.

Suivant les stratégies retenues, le contact pourra se faire quand la membrane est au repos ou au contraire quand la membrane est déformée. Quand le niveau de vide résiduel à l'intérieur de la chambre de dépression devient inférieur au seuil de basculement du détecteur, c'est-à-dire quand la différence entre la pression atmosphérique et la pression à l'intérieur de la chambre de dépression est inférieure à un seuil de pression donné, le détecteur commande le redémarrage du système de pompage, c'est-à-dire le redémarrage du moteur thermique (si le vide est obtenu grâce à la dépressurisation du collecteur d'admission) ou de la pompe dédiée.

Dans le cas d'un système hybride, où une partie du vide est obtenue à l'aide d'un collecteur d'admission et une partie du vide est obtenue par une pompe dédiée, on peut envisager de ne redémarrer que la pompe dédiée si la mise en route de celle-ci est moins consommatrice d'énergie, ou moins polluante, que le redémarrage du moteur thermique.

Par exemple, un circuit de mise en route ou un circuit d'alimentation de la pompe dédiée, peut transiter par le capteur de vide, qui ferme ainsi le circuit de la pompe quand le niveau de vide à l'intérieur du servofrein devient insuffisant.

Afin d'éviter que le conducteur ne soit surpris, au redémarrage, par une pédale de frein qui deviendrait trop dure à cause d'un niveau de vide insuffisant à l'intérieur du servofrein, niveau de vide insuffisant du fait d'une défaillance du capteur de vide, un système de contrôle du bon fonctionnement de ce capteur peut être souhaitable.

Cet aspect est d'autant plus important dans le cas des véhicules dits « Stop and Start », le moteur thermique du véhicule étant coupé à chaque immobilisation, même brève, du véhicule, par exemple lors des arrêts aux feux rouges. Afin d'éviter que le conducteur ne soit surpris, au redémarrage, par une pédale de frein qui deviendrait trop dure à cause d'un niveau de vide insuffisant à l'intérieur du servofrein, un système de contrôle du bon fonctionnement du capteur de vide peut être souhaitable.

Il est connu, par le document WO 00/31766, un détecteur de pression comportant un circuit de mesure dans lequel est inséré un diaphragme exposé à la pression à mesurer et comportant une couche conductrice dont la conductivité varie en fonction de la pression.

On connait également, par le document US 3,372,372, un dispositif d'alerte d'une décélération d'un véhicule, à l'aide d'un interrupteur spécifique fermant un circuit d'alimentation d'une lampe lorsque la pression dans le collecteur d'admission est trop élevée, liée à une décélération du véhicule. Toutefois, dans ces deux documents, il n'est pas prévu de gérer le cas d'une défaillance du circuit de mesure.

L'invention a pour objectif de proposer un capteur de vide avec un niveau de contrôle renforcé, permettant non seulement de détecter une valeur représentative de l'état de vide à l'intérieur du servofrein, et permettant également d'évaluer une probabilité de défaillance du capteur.

A cette fin, un détecteur de vide pour chambre de dépression de servofrein de véhicule automobile, comprend une membrane déformable sous l'effet des variations de pression dans la chambre. Sur la membrane est disposé un élément de détection électrique ou électronique apte à détecter une valeur seuil de déformation de la membrane, et muni de deux bornes permettant de le relier à un circuit électrique.

Selon l'invention, une résistance est en outre connectée électriquement entre les deux bornes.

En introduisant une résistance dans le circuit de détection de vide, il est possible de savoir si le circuit de mesure présente une défaillance, par exemple par la mesure de la tension aux bornes du circuit.

Avantageusement, la résistance a une résistance électrique, en fonction de son branchement, bien au dessus de la résistance du circuit complet hors la résistance (par exemple 1 Kohm pour un branchement en série).

Selon un mode de réalisation avantageux, l'élément de détection et la résistance sont connectés en série.

Selon un autre mode de réalisation avantageux, l'élément de détection et la résistance sont connectés en parallèle.

De manière préférentielle, l'élément de détection comporte une ou plusieurs zones de contact entre deux portions de circuit électrique, les zones de contact étant disposées de manière à ce que le contact soit ouvert jusqu'à un certain niveau de déformation de la membrane, et soit fermé au-delà (ou en deçà) de ce niveau de déformation.

Selon un mode de réalisation préféré, la résistance se trouve à moins de 5cm de l'élément de détection, ou se trouve dans un carter englobant la résistance et l'élément de détection.

De manière préférentielle, la résistance est connectée de manière permanente aux bornes de l'élément de détection.

Selon un autre aspect, un servofrein de véhicule automobile comporte un détecteur suivant l'une des revendications précédentes, dans lequel la membrane de l'élément de détection fait partie d'une soupape anti-retour, disposée entre une chambre de dépression du servofrein, et une canalisation de dépressurisation reliant le servofrein soit à un collecteur d'admission d'un moteur, soit à une pompe à vide.

Avantageusement, ce servofrein comporte une unité de commande électronique apte à détecter au moins deux valeurs seuil de courant ou de tension entre les deux bornes de l'élément de détection, de manière à être apte à identifier trois états de l'élément de détection : alimenté en courant contact ouvert, alimenté en courant contact fermé, et non alimenté en courant.

Selon un autre aspect encore, un procédé de pilotage d'un servofrein de véhicule automobile, comporte les étapes suivantes :
après l'arrêt du véhicule, tant que le conducteur n'a pas mis le véhicule en configuration de parcage, on vérifie périodiquement si une chambre de dépression du servofrein comporte une réserve de vide suffisante, en vérifiant :
   - qu'un détecteur de vide est correctement alimenté en courant électrique ;
   - que ce détecteur de vide indique un niveau de vide supérieur à un seuil prédéfini ;
et, si l'une au moins de ces conditions n'est pas vérifiée, on actionne le moteur du véhicule, ou on actionne une pompe à vide de manière à augmenter le niveau de vide dans la chambre de dépression.

En effet, si le détecteur de vide n'est pas correctement alimenté, bien que cela ne signifie pas forcément que le niveau de vide soit insuffisant, par précaution, on actionne le dispositif permettant d'augmenter le niveau de vide dans la chambre de dépression.

On considère que le détecteur de vide est correctement alimenté en courant électrique si la tension aux bornes d'alimentation du détecteur est supérieure à une tension seuil, ou si le courant traversant ces bornes d'alimentation est supérieur à un courant seuil.

Un message ou un voyant d'erreur peut-être affiché à l'attention du conducteur du véhicule s'il a été constaté que le détecteur de vide n'est plus correctement alimenté en courant électrique, alors que le véhicule n'est pas en configuration de parcage.

Ainsi, le conducteur pourra mettre son véhicule en réparation afin d'éviter d'actionner en permanence, de manière superflue, l'élément de pompage.

L'invention sera mieux comprise à la lecture de la description détaillée de quelques modes de réalisation pris à titre d'exemples nullement limitatifs, et illustrés par les dessins annexés, sur lesquels :
- la figure 1a est un schéma de principe d'un système de freinage comprenant un servofrein muni d'un clapet antiretour intégrant un détecteur suivant l'invention ;
- la figure 1b est un schéma de principe du système de freinage de la figure 1a, représenté pour une valeur de dépression dans le servofrein différente de la figure 1a ;

- la figure 1c est un schéma de principe du système de freinage des figures 1a et 1b, représenté pour une troisième valeur de dépression à l'intérieur du servofrein;
- la figure 2 est une vue en perspective d'un clapet antiretour équipé d'un détecteur suivant l'invention.

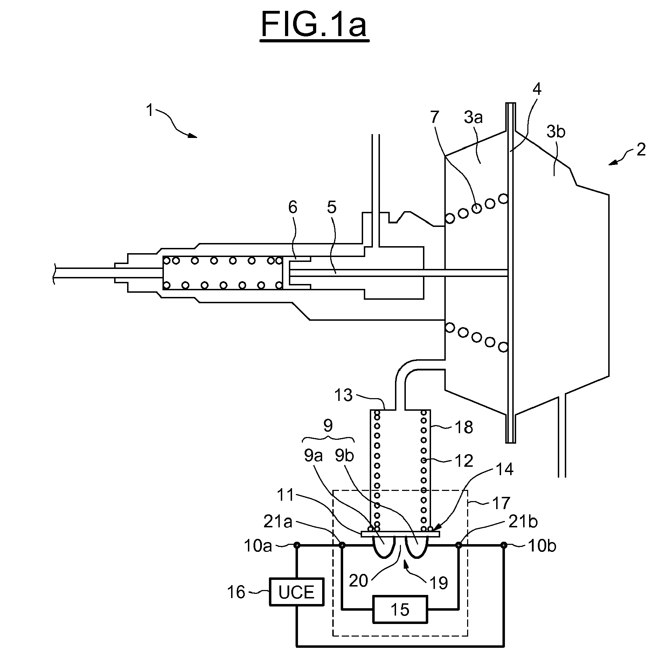

Tel qu'illustré sur la figure 1a, un système de freinage 1 comprend un servofrein 2 à l'intérieur duquel se trouvent deux chambres à pression variable 3a et 3b, séparées par une membrane d'actionnement 4. La position de la membrane d'actionnement 4 dépend des pressions respectives des chambres 3a et 3b ainsi que de l'effort exercé par un ressort 7 reliant la membrane et une paroi du servofrein 2.

Le déplacement de la membrane d'actionnement 4 est transmis par une tige d'actionnement 5 à l'extrémité d'un piston 6 qui est simultanément actionné par la pression du liquide de frein commandée par la pédale (non représentée) de frein du véhicule.

Le servofrein 2 comprend une tubulure 18 par laquelle il est possible d'extraire de l'air de la chambre 3a, par exemple en reliant la tubulure 18 au collecteur d'admission (non représenté) d'un moteur thermique ou en reliant la tubulure 18 à une pompe à vide dédiée (non représentée).

La tubulure 18 présente une ouverture de sortie d'air 14 par laquelle la tubulure 18 peut être connectée à l'élément de pompage correspondant (collecteur d'admission ou pompe à vide dédiée). L'ouverture de sortie d'air 14 est munie d'un clapet antiretour 19 qui permet à l'air de sortir de la chambre 3a par l'ouverture de sortie d'air 14, mais non d'y entrer par cette même ouverture. Le clapet 19 comprend par exemple une membrane de clapet souple 11 apte à venir en contact étanche avec un contour de la sortie d'air 14. La membrane 11 peut être reliée par un ressort de clapet 12, à un appui 13 placé à l'intérieur de la tubulure 18. La position de la membrane 11, ainsi que son niveau de déformation, dépendent ainsi de l'effort résultant d'une force de rappel du ressort 12 d'une part, et de la différence de pression entre l'intérieur de la chambre 3a et la pression à l'extérieur de l'ouverture 14 de la sortie d'air, d'autre part.

La longueur d'équilibre du ressort peut par exemple être choisie de manière à ce que la membrane 11 vienne en contact avec l'ouverture de sortie d'air 14 quand la différence de pression est nulle, ou quand la pression à l'intérieur de la chambre 3a est très légèrement inférieure, d'une première valeur seuil, à la pression régnant à l'extérieur de l'ouverture 14.

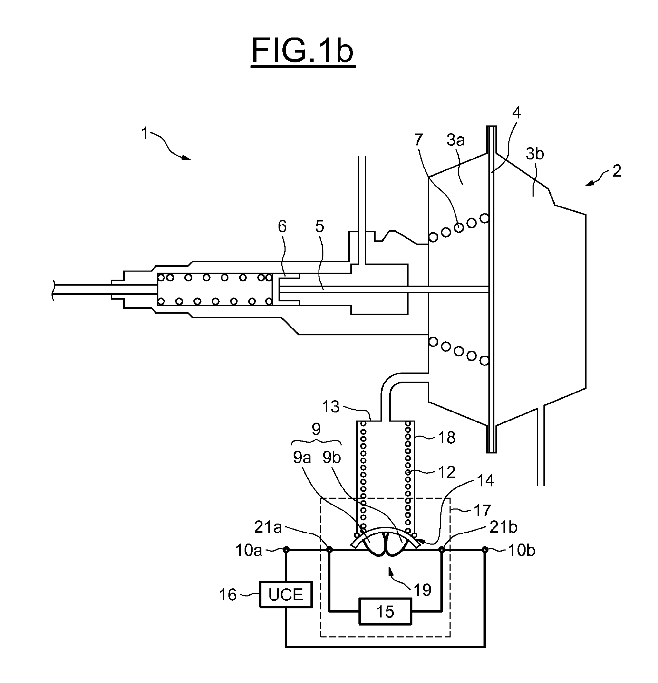

La raideur du ressort 12 peut être choisie de manière à autoriser une inflexion de la membrane 11 vers l'intérieur de la tubulure 18, quand la dépression entre la chambre 3a et l'extérieur de l'ouverture 14 devient supérieure au premier seuil. Le dispositif se trouve alors dans la configuration de la figure 1b.

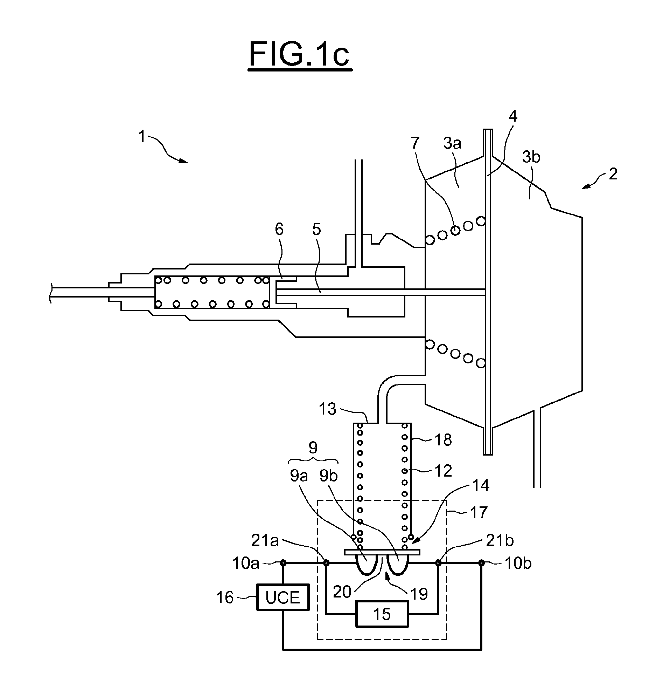

Quand, grâce à l'action d'un élément d'aspiration (non représenté) la pression à l'extérieur de l'ouverture 14 de sortie d'air devient inférieure à la pression régnant à l'intérieur de la chambre 3a, ou quand la différence entre cette pression extérieure et la pression à l'intérieur de la chambre 3a devient inférieure au premier seuil, l'allongement du ressort 12 qui en résulte, permet à la membrane 11 de s'écarter de l'ouverture 14 de sortie d'air. Le dispositif se retrouve alors dans la configuration de la figure 1c.

Sur la membrane 11, sont disposés des contacteurs 9a et 9b obtenus par exemple par dépôt métallique sur la membrane 11. Chaque contacteur 9a et 9b est relié à une borne de connexion respectivement 10a et 10b. Un élément résistif 15 est disposé entre les bornes 10a et 10b, en parallèle à l'élément de détection 9 formé par les deux contacteurs 9a et 9b. L'élément de détection 9 et l'élément résistif 15 forment un détecteur de vide 17 muni de bornes de connexion 10a et 10b. Les contacteurs 9a et 9b sont placés sur la membrane 11 de manière à laisser entre eux un intervalle 20 dont la largeur varie en fonction du niveau de flexion de la membrane 11. Cet intervalle 20 est choisi de manière à ce que, quand la dépression entre la chambre 3a et l'ouverture 14 devient supérieure à un second seuil, les contacteurs 9a et 9b se touchent. A défaut d'un contact franc, l'intervalle 20 entre les deux contacteurs peut être suffisamment faible pour permettre le passage d'un courant électrique entre les deux contacteurs.

Ainsi, tant que le clapet 19 reste ouvert (figure 1c), ou tant que la membrane 11 est en contact avec l'ouverture de sortie d'air sans atteindre le niveau de déformation correspondant au deuxième seuil de différence de dépression (figure 1a), un courant électrique ne peut traverser le détecteur 17 entre ses bornes 10a et 10b, qu'en traversant la résistance 15.

Lorsque la membrane 11 atteint le niveau de déformation correspondant au deuxième seuil de différence de pression, les contacteurs 9a et 9b ferment la branche du circuit de l'élément de détection 9, disposée en parallèle à la résistance 15, et font ainsi chuter la résistance globale du détecteur 17.

En effet, la résistance intrinsèque minimale de la branche contenant les contacteurs 9a et 9b, quand ceux-ci se touchent, est, de manière préférentielle, choisie sensiblement inférieure, par exemple dix fois inférieure, à la résistance de l'élément résistif 15. Ainsi, quand les contacteurs 9a et 9b se touchent, la résistance globale du détecteur de vide 17 chute en première approximation, de la valeur de l'élément résistif 15, à la valeur résistive minimale (c'est-à-dire en position de contacteurs jointifs) de la branche contenant l'élément de détection 9.

On peut envisager des variantes de réalisation où la résistance de l'élément résistif 15 est du même ordre que celle de la branche de l'élément de détection. Dans ce cas, on choisira tout de même une résistance de l'élément de détection inférieure ou égale à celle de l'élément résistif 15, de manière à ce que la résistance globale du détecteur de vide 17 chute au moins de moitié quand le contact se fait entre les contacteurs 9a et 9b.

Une unité de commande électronique 16 est reliée aux bornes 10a et 10b du détecteur de vide 17. Une tension prédéfinie, par exemple 12 volts ou 42 volts, peut être appliquée entre les bornes 10a et 10b par un système d'alimentation électrique (non représenté) du véhicule. L'unité de commande électronique 16 est apte à détecter l'intensité de courant électrique traversant le détecteur de vide 17 entre ses bornes 10a et 10b.

A défaut d'une quantification continue de l'intensité du courant, l'unité de commande électronique 16 est au moins apte à détecter si le courant traversant le détecteur de vide 17 a franchi un premier seuil correspondant à la tension appliquée aux bornes et divisée par la résistance de l'élément résistif 15, ou si l'intensité du courant a franchi un second seuil correspondant à la tension appliquée entre les bornes 10a et 10b divisée par la résistance équivalente minimale de l'élément résistif 15 en parallèle avec l'élément de détection 9.

L'unité de commande électronique 16 est ainsi apte à détecter trois états du détecteur de vide 17.

Un premier état correspond à une situation où aucun courant ne passe au travers du détecteur de vide 17, ce qui traduit a priori, quand le véhicule est en mode de roulage potentiel, une défaillance du système électrique qui alimente la portion de circuit contenant le détecteur de vide 17, ou ce qui peut traduire un faux contact (par exemple un fil sectionné) au niveau des fils reliant le détecteur de vide 17 au système d'alimentation.

Un deuxième état correspond à une situation où le courant passe au travers du détecteur 17 et la résistance de ce dernier est équivalente à celle de l'élément résistif 15, ce qui signifie que le détecteur de vide 17 est bien alimenté en courant électrique, et signifie également que la différence de pression entre l'intérieur de la chambre de pression 3a et l'extérieur de l'ouverture 14 de sortie d'air est inférieure en valeur absolue au second seuil de différence de pression.

Un troisième état correspond à une situation où la valeur d'intensité de courant détecté permet de conclure à la fois que le détecteur de vide 17 est bien alimenté en courant, et que les contacteurs 9a et 9b ferment la branche du circuit disposée en parallèle à celle contenant l'élément résistif 15, cet état traduisant le cas de figure où la différence de pression entre l'intérieur de la chambre de dépression 3a et l'extérieur de l'ouverture 14 de sortie d'air est supérieure en valeur absolue au second seuil de différence de pression.

On peut envisager des variantes de réalisation, où l'unité de commande électronique 16 envoie un courant d'intensité prédéterminée au travers du détecteur de vide 17 situé entre les bornes 10a et 10b, et mesure la tension qui en résulte entre ces deux bornes. On peut également envisager des variantes de réalisation dans lesquelles un élément résistif est disposé en série avec les deux contacteurs 9a et 9b dans une boucle reliée à une unité de contrôle électronique 16.

Dans le cas où la résistance 15 est disposée en parallèle par rapport à la branche contenant les contacteurs 9a et 9b, il est avantageux de placer au voisinage immédiat de l'élément de détection 9, l'élément résistif 15, ainsi que les points de jonction 21a et 21b entre la portion de circuit de détection et la portion de circuit résistive. On est ainsi en mesure de détecter une défaillance de circuit électrique sur toute la longueur des connexions reliant l'unité de contrôle électronique 16 et les points de jonction 21a et 21b. On peut par exemple imposer que la résistance 15 et les points de jonction 21a et 21b se trouvent tous deux à une distance inférieure à 5cm, de l'élément de détection.

On peut envisager une résistance 15 disposée en série avec la portion de circuit contenant l'élément de détection 9, une liaison filaire supplémentaire permettant de mesurer la tension aux bornes de l'élément résistif 15. La résistance 15 permet alors, comme dans la configuration parallèle, de vérifier la bonne alimentation du circuit de l'élément de détection quand celui-ci est ouvert. Dans ce cas, on aura au contraire intérêt à placer l'élément résistif au voisinage ou à l'intérieur de l'unité de commande électronique 16, afin d'éviter de détecter inutilement des anomalies du circuit d'alimentation du détecteur de vide qui seraient liées à un endommagement de cette liaison filaire supplémentaire.

On peut également envisager d'utiliser une résistance de contrôle 15 disposée au voisinage ou sur la membrane 11, en série avec l'élément de détection 9, l'élément de détection 9 étant configuré pour couper le circuit entre les deux bornes 10a et 10b quand le niveau de vide à l'intérieur de la chambre de dépression devient insuffisant. La résistance 15 permet alors de vérifier que le courant traversant l'élément de détection, et indiquant que la dépression est suffisante, ne provient pas d'un faux contact entre les fils d'alimentation reliant l'unité de commande électronique 16 et le détecteur 17. Cette résistance 15 est alors de manière préférentielle intégrée au détecteur 17.

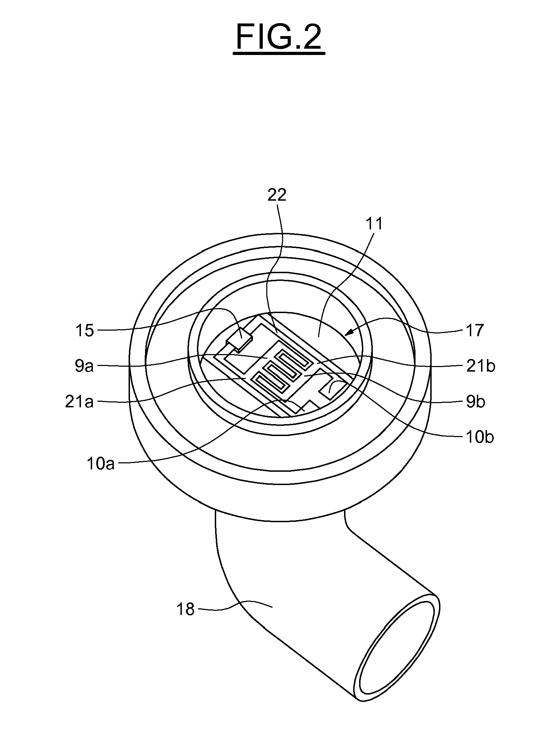

La figure 2 est une vue en perspective d'un détecteur de vide 17 suivant l'invention, comportant, comme dans les figures 1a à 1c, un élément résistif 15 disposé en parallèle à un circuit comprenant deux contacteurs 9a et 9b. On retrouve sur la figure 2 des éléments communs aux figures 1a à 1c, les mêmes éléments étant alors désignés par les mêmes références. Sur une membrane de clapet 11, est déposé un circuit 22 par des méthodes de dépôt ou de gravage connues, par exemple par sérigraphie ou par gravage chimique.

Le circuit 22 comporte deux extrémités de connexion 10a et 10b. Une première branche gravée relie ses bornes 10a et 10b, sur laquelle est disposé un élément résistif 15. La borne 10a est en outre reliée à un contacteur 9a ayant sensiblement la forme d'un peigne gravé sur la membrane 11. La borne 10b est en outre reliée à un contacteur 9b ayant sensiblement la forme d'un peigne gravé sur la membrane 11. Les dents des deux peignes s'interpénètrent sans se toucher dans la configuration de la figure 2.

En fonction de la déformation de la membrane 11, les dents des deux peignes constituant les contacteurs 9a et 9b peuvent se toucher, ou du moins se rapprocher suffisamment l'un de l'autre pour qu'un courant circule entre les deux connecteurs, fermant ainsi un circuit parallèle à la branche sur laquelle est disposé l'élément résistif 15.

Dans ce cas particulier, l'élément résistif 15 est disposé, comme l'élément de détection 9, directement sur la membrane 11.

A défaut de se trouver sur la membrane 11, l'élément résistif 15 sera de préférence disposé à l'intérieur d'un carter englobant conjointement l'élément de détection 9.

Les bornes 10a et 10b du dispositif de la figure 2, sont, comme dans le mode de réalisation des figures 1a à 1c, connectées à une unité de commande électronique 16, non représentée sur la figure 2.

Pendant les intervalles de temps où le véhicule est à l'arrêt, mais reste susceptible de redémarrer prochainement (car le conducteur du véhicule n'a pas encore placé les commandes du tableau de bord en configuration de parcage du véhicule), l'unité de commande électronique 16 permet de piloter le maintien d'une dépression suffisante à l'intérieur de la chambre de dépression 3a du servofrein 2.

En effet, à partir du moment où le véhicule s'est arrêté, l'unité de commande électronique 16 vérifie en continu si le détecteur de vide 17 indique encore un niveau de vide suffisant à l'intérieur du servofrein 2. L'unité de commande électronique 16 vérifie également que ce détecteur de vide 17 est correctement alimenté en courant. Si l'une de ces conditions n'est pas vérifiée, l'unité de commande électronique 16 provoque la mise en route d'un élément permettant le pompage de l'air hors du servofrein au travers de l'ouverture 14 de sortie d'air, par exemple en provoquant un redémarrage du moteur thermique du véhicule, ou en déclenchant la mise en route d'une pompe à vide dédiée.

Dans le cas où le détecteur de vide 17 n'est plus alimenté en courant, l'unité en commande électronique 16 peut en outre envoyer un message d'avertissement au conducteur du véhicule, par exemple en allumant un voyant au tableau de bord ou en affichant un message plus explicite sur un écran.

Grâce à la mise en route « par défaut » de l'élément de pompage, on s'assure que le conducteur ne se retrouve pas confronté à une pédale de freinage sensiblement plus dure qu'il ne s'y attend, ce qui peut le surprendre.

L'objet de l'invention ne se limite pas aux exemples de réalisation décrits et peut se décliner en de nombreuses variantes, par exemple en ce qui concerne le mode de déclenchement des éléments de pompage quand les contacteurs ouvrent ou ferment une branche du circuit du détecteur de vide 17.

On peut, comme décrit plus haut, subordonner le déclenchement de l'élément de pompage à un signal de l'unité de commande électronique 16, qui envoie ce signal en fonction de l'intensité électrique détectée entre les bornes 10a et 10b. On peut également envisager, dans la configuration parallèle décrite sur les figures 1a à 1c, de choisir une résistance 15 suffisamment élevée pour que le courant transitant dans la seule branche contenant l'élément résistif soit insuffisant pour alimenter l'élément de pompage, et interposer le détecteur de vide 17 dans le circuit d'alimentation de l'élément de pompage, l'unité de commande électronique 16 vérifiant uniquement si, un instant quelconque, le courant cesse de passer au travers de l'élément résistif 15. Cette vérification peut se faire de manière périodique à partir d'une certaine durée de non déclenchement de l'élément de pompage.

On peut aussi envisager de ne pas actionner l'élément de pompage systématiquement pendant le roulage du véhicule, mais uniquement quand le vide détecté devient insuffisant. Cette variante de réalisation est en particulier intéressante pour économiser de l'énergie quand le vide est assuré par une pompe à vide dédiée. La sécurisation du système de détection est alors vitale.

Le détecteur de vide 17 suivant l'invention permet, moyennant un surcoût réduit de fabrication par rapport aux détecteurs actuels, de sécuriser la fonction d'assistance au freinage, dont la mise en défaut peut se révéler particulièrement handicapante dans le cas de véhicules de type « Stop and Start ». Le détecteur de vide suivant l'invention permet aussi au besoin de n'effectuer que le vide "juste nécessaire" à l'intérieur du servofrein, pour réduire l'empreinte carbone du véhicule.

## Revendications

1. Détecteur de vide (17) pour chambre de dépression (3a) de servofrein (2) de véhicule automobile, comprenant un circuit électrique et une membrane (11) faisant partie d'une soupape anti-retour (19) apte à être disposée entre une chambre de dépression (3a) du servofrein (2), et une canalisation de dépressurisation reliant le servofrein soit à un collecteur d'admission d'un moteur, soit à une pompe à vide, ladite membrane (11) étant déformable sous l'effet des variations de pression dans la chambre (3a), sur laquelle est disposé un élément de détection électrique (9) ou électronique apte à détecter une valeur seuil de déformation de la membrane (11) et muni de deux bornes (10a, 10b) permettant de le relier au circuit électrique, une résistance (15) étant connectée électriquement entre les deux bornes (10a, 10b), le circuit électrique comportant une unité de commande électronique apte à détecter au moins deux valeurs seuil de courant ou de tension entre les deux bornes (10a, 10b) de l'élément de détection (9), de manière à être apte à identifier trois états de l'élément de détection (9) : alimenté en courant contact ouvert, alimenté en courant contact fermé, et non alimenté en courant.

2. Détecteur de vide selon la revendication 1, dans lequel l'élément de détection (9) et la résistance (15) sont connectés en série.

3. Détecteur de vide selon la revendication 1, dans lequel l'élément de détection (9) et la résistance (15) sont connectés en parallèle.

4. Détecteur selon l'une des revendications précédentes, l'élément de détection comportant une ou plusieurs zones de contact (9a, 9b) entre deux portions de circuit électrique, les zones de contact étant disposées de manière à ce que le contact soit ouvert jusqu'à un certain niveau de déformation de la membrane (11), et soit fermé au-delà (ou en deçà) de ce niveau de déformation.

5. Détecteur selon la revendication 3, dans lequel la résistance (15) est connectée de manière permanente aux bornes (10a, 10b) de l'élément de détection.

6. Procédé de pilotage d'un servofrein (2) de véhicule automobile, comportant les étapes suivantes :
après l'arrêt du véhicule, tant que le conducteur n'a pas mis le véhicule en configuration de parcage, on vérifie périodiquement si une chambre de dépression (3a) du servofrein (2) comporte une réserve de vide suffisante, en vérifiant :
- qu'un détecteur de vide (17) selon l'une des revendications 1 à 5 est correctement alimenté en courant électrique ;
- que ce détecteur de vide (17) indique un niveau de vide supérieur à un seuil prédéfini ;
et, si l'une au moins de ces conditions n'est pas vérifiée, on actionne le moteur du véhicule, ou on actionne une pompe à vide de manière à augmenter le niveau de vide dans la chambre de dépression.

7. Procédé de pilotage selon la revendication précédente, dans lequel un message ou un voyant d'erreur est affiché à l'attention du conducteur du véhicule si le détecteur de vide n'est plus correctement alimenté en courant électrique alors que le véhicule n'est pas en configuration de parcage.

## Patentansprüche

1. Vakuumsensor (17) für Unterdruckkammer (3a) für Bremskraftverstärker (2) eines Kraftfahrzeugs, der einen elektrischen Schaltkreis und eine Membran (11) umfasst, die Teil eines Rückschlagventils (19) ist, das geeignet ist, um zwischen einer Unterdruckkammer (3a) des Bremskraftverstärkers (2) und einer Druckabfallkanalisation, die den Bremskraftverstärker entweder mit einem Ansaugsammler eines Motors oder mit einer Vakuumpumpe verbindet, angeordnet zu sein, wobei die Membran (11) unter der Einwirkung der Druckvariationen in der Kammer (3a) verformbar ist, auf der ein elektrisches oder elektronisches Erfassungselement (9) angeordnet ist, das geeignet ist, um einen Verformungsschwellenwert der Membran (11) zu erfassen, und das mit zwei Klemmen (10a, 10b) versehen ist, die es erlauben, es mit dem elektrischen Schaltkreis zu verbinden, wobei ein Widerstand (15) elektrisch zwischen den zwei Klemmen (10a, 10b) angeschlossen ist, wobei der elektrische Schaltkreis eine elektronische Steuereinheit umfasst, die geeignet ist, um mindestens zwei Strom- oder Spannungsschwellenwerte zwischen den zwei Klemmen (10a, 10b) des Erfassungselements (9) derart zu erfassen, dass sie geeignet ist, drei Zustände des Erfassungselements (9) zu identifizieren: mit Strom versorgt Kontakt offen, mit Strom versorgt Kontakt geschlossen und nicht mit Strom versorgt.

2. Vakuumsensor nach Anspruch 1, bei dem das Erfassungselement (9) und der Widerstand (15) in Serie geschaltet sind.

3. Vakuumsensor nach Anspruch 1, bei dem das Erfassungselement (9) und der Widerstand (15) parallel geschaltet sind.

4. Sensor nach einem der vorhergehenden Ansprüche, wobei das Erfassungselement eine oder mehrere Kontaktzonen (9a, 9b) zwischen zwei Abschnitten des elektrischen Schaltkreises umfasst, wobei die Kontaktzonen derart angeordnet sind, dass der Kontakt bis zu einem bestimmten Verformungsniveau der Membran (11) offen ist und über (oder unter) diesem Verformungsniveau geschlossen ist.

5. Sensor nach Anspruch 3, bei dem der Widerstand (15) dauerhaft an den Klemmen (10a, 10b) des Erfassungselements angeschlossen ist.

6. Steuerverfahren eines Bremskraftverstärkers (2) eines Kraftfahrzeugs, das die folgenden Schritte umfasst:
nach dem Stoppen des Fahrzeugs, solange der Fahrer das Fahrzeug nicht in Parkkonfiguration gebracht hat, periodisches Prüfen, ob eine Unterdruckkammer (3a) des Bremskraftverstärkers (2) eine ausreichende Vakuumreserve umfasst, indem Folgendes geprüft wird:
- dass ein Vakuumsensor (17) nach einem der Ansprüche 1 bis 5 korrekt mit elektrischem Strom versorgt ist,
- dass dieser Vakuumsensor (17) ein Vakuumniveau über einem vordefinierten Schwellenwert anzeigt,
und, falls mindestens eine dieser Bedingungen nicht erfüllt ist, der Motor des Fahrzeugs betätigt wird oder eine Vakuumpumpe derart betätigt wird, dass das Vakuumniveau in der Unterdruckkammer erhöht wird.

7. Steuerverfahren nach dem vorhergehenden Anspruch, bei dem eine Meldung oder eine Fehleranzeigelampe für den Fahrer des Fahrzeugs angezeigt wird, falls der Vakuumsensor nicht mehr korrekt mit elektrischem Strom versorgt ist, während das Fahrzeug nicht in Parkkonfiguration ist.

## Claims

1. Vacuum detector (17) for a vacuum chamber (3a) of a motor vehicle brake servo unit (2), comprising an electric circuit and a diaphragm (11) which is part of a non-return valve (19) that is able to be disposed between a vacuum chamber (3a) of the brake servo unit (2) and a depressurization line connecting the brake servo unit either to an engine intake manifold or to a vacuum pump, said diaphragm (11) being deformable under the effect of variations in pressure in the chamber (3a), on which there is disposed an electric or electronic detection element (9) that is able to detect a threshold deformation value of the diaphragm (11) and is provided with two terminals (10a, 10b) for connecting it to the electric circuit, a resistor (15) being electrically connected between the two terminals (10a, 10b), the electric circuit having an electronic control unit that is able to detect at least two threshold current or voltage values between the two terminals (10a, 10b) of the detection element (9), so as to be able to identify three states of the detection element (9): supplied with current, contact open; supplied with current, contact closed; and not supplied with current.

2. Vacuum detector according to Claim 1, in which the detection element (9) and the resistor (15) are connected in series.

3. Vacuum detector according to Claim 1, in which the detection element (9) and the resistor (15) are connected in parallel.

4. Detector according to one of the preceding claims, the detection element having one or more contact zones (9a, 9b) between two electric circuit portions, the contact zones being disposed such that the contact is open as far as a certain level of deformation of the diaphragm (11), and is closed above (or below) this level of deformation.

5. Detector according to Claim 3, in which the resistor (15) is connected permanently to the terminals (10a, 10b) of the detection element.

6. Method for controlling a motor vehicle brake servo unit (2), comprising the following steps:
after the vehicle has been stopped, before the driver has put the vehicle into the park configuration, a periodic check is made as to whether a vacuum chamber (3a) of the brake servo unit (2) has a sufficient vacuum reserve, by checking:
- that a vacuum detector (17) according to one of Claims 1 to 5 is being correctly supplied with electric current;
- that this vacuum detector (17) is indicating a vacuum level greater than a predefined threshold;
and, if at least one of these conditions is not met, the engine of the vehicle is actuated, or a vacuum pump is actuated so as to increase the vacuum level in the vacuum chamber.

7. Control method according to the preceding claim, in which an error light or message is displayed for the attention of the vehicle driver if the vacuum detector is no longer being correctly supplied with electric current before the vehicle is in the park configuration.
